# DEMANDE DE BREVET EUROPEEN

(11) **EP 4 727 154 A1**
(43) Date de publication de la demande: **15.04.2026**
(21) Numéro de dépôt: 25206922.4
(22) Date de dépôt: 06.10.2025
(51) Int. Cl.: H04Q 9/00

(54) **PROCÉDÉ DE GESTION D'UN COMPTEUR COMMUNICANT**

(30) Priorité: 10.10.2024 FR 2410971
(71) Demandeur: SAGEMCOM ENERGY & TELECOM SAS, 92270 Bois-Colombes (FR)
(72) Inventeur: SERGI, Jérémie, 92270 BOIS-COLOMBES (FR); LOPES DA SILVA, Antonio, 92270 BOIS-COLOMBES (FR)
(74) Mandataire: Cabinet Le Guen Maillet

(57) **Abrégé**

La présente invention concerne un procédé de gestion de compteurs communicants alimentés par pile, pour mesurer une consommation d'un fluide, les compteurs communicants étant reliés à une plateforme centralisée de gestion de compteurs communicants, le compteur communicant étant dans un profil de fonctionnement donné.

Selon l'invention, la plateforme centralisée :
-reçoit (E300), d'un compteur communicant, une information représentative du niveau de charge de la pile du compteur,
- obtient (E301) l'âge du compteur,
- détermine (E307) à partir de l'information représentative du niveau de charge de la pile du compteur ct et de l'âge du compteur si le niveau de charge est inférieur ou supérieur à un abaque représentatif d'une évolution théorique d'un niveau de charge d'une batterie au cours du temps,
- sélectionne (E308) un profil de fonctionnement du compteur communicant en fonction de la détermination.
- transfère le profil de fonctionnement sélectionné au compteur si le profil de fonctionnement sélectionné est différent du profil de fonctionnement donné du compteur.

## Description

### DOMAINE TECHNIQUE

L'invention concerne le domaine des compteurs communicants alimentés par piles et comprenant une unité de mesure et concerne plus particulièrement le domaine de la gestion des compteurs communicants alimentés par pile pour préserver l'intégrité des mesures lorsque la pile arrive en fin de vie.

### ETAT DE LA TECHNIQUE ANTERIEURE

D'une manière connue, l'Internet des Objets (IoT, « Internet of Things » en anglais) est en pleine expansion. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple la collecte de relevés de consommations d'eau ou pour la surveillance à distance de conditions environnementales (température, pression...). L'Internet des Objets est considéré comme la troisième évolution de l'Internet, baptisée Web 3.0. L'Internet des Objets revêt un caractère universel pour désigner des objets connectés aux usages variés, par exemple dans le domaine de la e-santé ou de la domotique.

Une première approche adoptée pour interconnecter des objets, appelés objets communicants (« IoT device » en anglais), dans le cadre de l'Internet des Objets, s'appuie sur un déploiement, maitrisé par un opérateur, de passerelles de collecte situées sur des points géographiquement hauts. Hors opérations de maintenance, ces passerelles sont fixes et permanentes. On peut par exemple citer sur ce modèle les réseaux de type NB-IoT ( acronyme des termes anglais *Narrowband Internet of things*) ou SigFox (marque déposée) ou ThingPark (marque déposée) .

NB-loT utilise le réseau cellulaire et a été développé par le 3GPP.

Par exemple, en France, le réseau SigFox (marque déposée) s'appuie sur les points hauts des sites de transmission de TDF (« Télédiffusion De France »).

Ces passerelles de collecte communiquent avec les objets communicants grâce à des systèmes de communication radio moyenne ou longue portée (e.g. système LoRa (marque déposée) de la société Semtech). Cette approche s'appuie sur un nombre limité de passerelles de collecte (difficulté de déploiement de nouvelles infrastructures réseau), ainsi que sur un accès montant (« uplink » en anglais) fiable et sécurisé avec un ou plusieurs serveurs de collecte.

Une seconde approche consiste à connecter des objets communicants au travers de passerelles résidentielles. On peut par exemple citer la technologie Energy Gateway. Un système selon la technologie Energy Gateway est composé de deux parties distinctes : d'une part, une passerelle résidentielle et des capteurs périphériques, qui sont hébergés chez le consommateur et qui permettent la collecte d'informations, la transmission de ces informations à un serveur de collecte, ainsi que le contrôle de déclenchement de diverses actions (contrôle de l'enclenchement des radiateurs ou du chauffe-eau par exemple) ; d'autre part, le serveur de collecte qui assure la mise à disposition des informations reçues et la transmission de commandes pour le contrôle de déclenchement de diverses actions. Ce serveur de collecte est accessible via l'Internet. Les technologies radio employées pour communiquer avec les objets communicants selon cette seconde approche sont de relative courte portée (par exemple de type Zigbee (marque déposée), Bluetooth (marque déposée) ou Wi-Fi (marque déposée)) pour desservir une collecte locale restreinte aux objets de l'habitat.

De tels objets communicants comportent typiquement un ou plusieurs capteurs, et sont typiquement alimentés par piles (ou batteries). Une difficulté réside dans la préservation de la durée de vie des piles, et plus particulièrement dans le fait de garantir le fonctionnement des fonctionnalités indispensables de tels objets communicants tout au long de la durée de vie des piles.

Il est souhaitable de pallier ces inconvénients de l'état de la technique. Il est notamment souhaitable de fournir une solution qui permette d'assurer l'intégrité des données stockées et/ou fournies par ces objets communicants lorsque leurs piles arrivent en fin de vie, et ce tout en minimisant le surcoût matériel qu'entraînerait une telle solution. Il convient de noter qu'un surcoût matériel entraîne généralement un encombrement plus important (par exemple, des éléments capacitifs sont plus coûteux et plus encombrants que des transistors ou des résistances).

Ainsi, il est souhaitable de fournir un procédé de gestion d'un objet communicant permettant de garantir la fourniture en énergie électrique de l'objet communicant pendant une durée prédéfinie.

Les objets communicants sont par exemple des compteurs communicants et l'invention permet de prolonger la capacité des piles à fournir de l'énergie électrique au compteur communiquant pendant une durée prédéfinie tout en garantissant des mesures optimales de consommation de fluide (gaz, eau...).

### EXPOSE DE L'INVENTION

A cet effet, selon un premier aspect, il est proposé un procédé de gestion de compteurs communicants alimentés par piles, pour mesurer une consommation d'un fluide, les compteurs communicants étant reliés à une plateforme centralisée de gestion de compteurs communicants, le compteur communicant étant dans un mode de fonctionnement donné, caractérisé en ce que le procédé comporte les étapes, exécutées par la plateforme centralisée de gestion de compteurs communicants de :
- réception, d'un compteur communicant, d'une information représentative d'un niveau de charge de la pile du compteur communicant,
- obtention de l'âge du compteur communicant,
- détermination à partir de l'information représentative du niveau de charge de la pile du compteur communicant et de l'âge du compteur communicant si le niveau de charge est inférieur ou supérieur à un abaque représentatif d'une évolution théorique d'un niveau de charge d'une batterie au cours du temps,
- sélection d'un profil de fonctionnement du compteur communicant en fonction de la détermination,
- transfert du profil de fonctionnement sélectionné au compteur communicant si le profil de fonctionnement sélectionné est différent du niveau de fonctionnement donné du compteur communicant.

L'invention concerne aussi un dispositif de gestion de compteurs communicants alimentés par piles, pour mesurer une consommation d'un fluide, les compteurs communicants étant reliés à une plateforme centralisée de gestion de compteurs communicants, le compteur communicant étant dans un mode de fonctionnement donné, caractérisé en ce que le dispositif de gestion est compris dans la plateforme centralisée de gestion de compteurs communicants et comporte :
- des moyens de réception, d'un compteur communicant, d'une information représentative du niveau de charge de la pile du compteur communicant,
- des moyens d'obtention de l'âge du compteur communicant,
- des moyens de détermination à partir de l'information représentative du niveau de charge de la pile du compteur communicant et de l'âge du compteur communicant si le niveau de charge est inférieur ou supérieur à un abaque représentatif d'une évolution théorique d'un niveau de charge d'une batterie au cours du temps,
- des moyens de sélection d'un profil de fonctionnement du compteur communicant en fonction de la détermination,
- des moyens de transfert du profil sélectionné au compteur communicant si le niveau sélectionné est différent du niveau de fonctionnement donné du compteur communicant.

Ainsi, la présente invention permet d'adapter le profil de fonctionnement de compteurs communicants en fonction du niveau de charge des piles des compteurs communicants et permet d'augmenter la longévité des compteurs communicants. L'invention étant exécutée par une plateforme centralisée de gestion de compteurs communicants, la durée de vie des piles des compteurs communicants est augmentée.

Selon un mode particulier, le procédé est itératif et lorsqu'un profil de fonctionnement sélectionné est différent du profil de fonctionnement donné du compteur communicant, le procédé comporte en outre une étape d'attente pendant une durée prédéterminée avant d'exécuter une nouvelle itération du procédé.

Selon un mode particulier, les étapes de détermination, de sélection et de transfert sont conditionnelles à un profil dynamique du compteur communicant.

Selon un mode particulier, au moins trois profils différents sont sélectionnables :
- un premier profil dans lequel le compteur communicant est dans un mode de fonctionnement nominal,
- un second profil dans lequel le compteur communicant est dans un mode de fonctionnement dégradé,
- un troisième profil dans lequel le compteur communicant est dans un mode de fonctionnement minimal.

Selon un mode particulier, si le profil de fonctionnement donné est le premier profil, le profil sélectionné est le premier ou le second profil, si le profil de fonctionnement donné est le second profil, le profil sélectionné est le premier ou le second ou le troisième profil et si le profil de fonctionnement donné est le troisième profil, le profil sélectionné est le second ou le troisième profil.

Selon un mode particulier, le profil de fonctionnement donné est le second profil, le procédé préalablement à la sélection du premier profil vérifie si le niveau de charge est supérieur à l'abaque représentatif d'une évolution théorique d'un niveau de charge d'une batterie au cours du temps d'un nombre prédéterminé de pourcents.

Selon un mode particulier, si le niveau de charge est inférieur à l'abaque représentatif d'une évolution théorique d'un niveau de charge d'une batterie au cours du temps, le procédé comporte en outre les étapes d'extrapolation linéaire de la consommation en énergie électrique du compteur communicant jusqu'à la fin de vie de la pile prévue par le constructeur du compteur communiquant à partir de la consommation en énergie électrique du compteur communicants sur une période de temps et de vérification si la consommation extrapolée est inférieure ou égale à l'information représentative du niveau de charge de la pile du compteur communicant et en ce que la sélection d'un profil de fonctionnement différent du profil de fonctionnement donné est effectuée si la consommation extrapolée est inférieure ou égale à l'information représentative du niveau de charge de la pile du compteur communicant.

Selon un autre aspect, il est proposé un support de stockage non transitoire sur lequel est stocké un programme d'ordinateur comprenant des instructions de code de programme pour exécuter le procédé de gestion, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'architecture d'un système de collecte de données de compteurs communicants alimentés par une pile ;
[Fig. 2] illustre schématiquement un exemple d'architecture matérielle d'une plateforme centralisée de gestion de compteurs communicants alimentés par piles ;
[Fig. 3] est un algorigramme d'un procédé de surveillance de la durée de vie de compteurs communicants alimentés par piles ;
[Fig. 4] est un algorigramme d'un procédé d'adaptation du fonctionnement de compteurs communicants alimentés par piles ;
[Fig. 5] est un exemple d'évolution de la consommation électrique d'un compteur communicant alimenté par piles et d'un abaque utilisé par la présente invention.

### EXPOSE DETAILLE DE MODES DE REALISATION

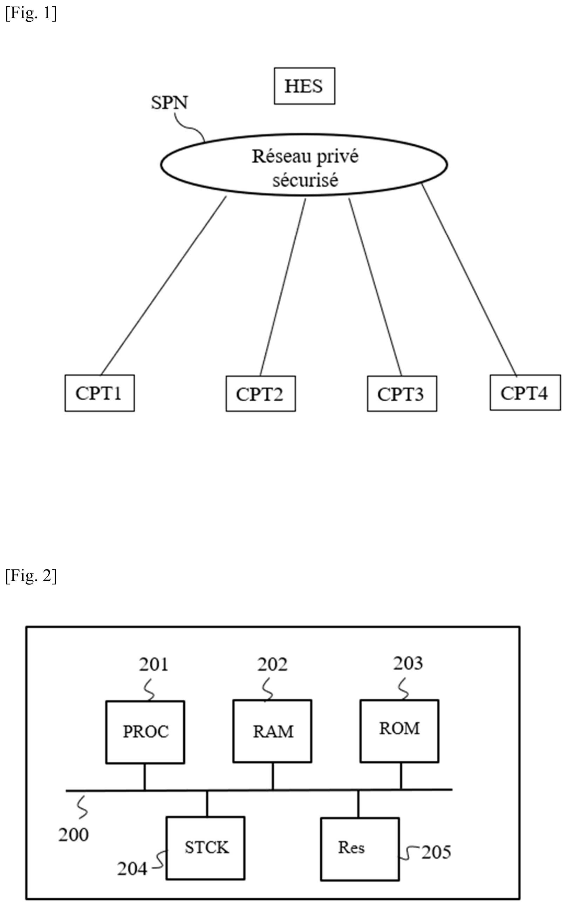

La Fig. 1 illustre schématiquement un exemple d'architecture d'un système de collecte de données de compteurs communicants alimentés par une pile.

Le système de collecte comporte une plateforme HES centralisée de gestion de compteurs communicants alimentés par pile reliée par un réseau privé sécurisé SPN à des compteurs communicants alimentés par piles CPT1 à CPTN.

Il faut entendre le terme « pile » comme étant une unique pile, ou un ensemble de piles fournissant conjointement une source d'énergie électrique autonome.

La présente invention est décrite dans un mode de réalisation particulier où l'objet communicant est un compteur de fluide, c'est-à-dire adapté et configuré pour mesurer une consommation d'un fluide (eau, gaz...). La présente invention est aussi applicable à des objets communicants tels que des systèmes de mesure d'énergie (électricité) ou des capteurs de température, de pression, d'humidité....

Chaque compteur communicant CPT1 à CPTN comprend notamment une unité de mesure pour acquérir des mesures, une unité de communication, une unité de signalement pour émettre des signaux d'alarme, et une unité de contrôle non représentées en Fig. 1. Typiquement, l'unité de mesure peut être adaptée et configurée pour mesurer une consommation d'eau, ou une consommation d'un autre fluide tel que du gaz.

L'unité de communication comprend un ensemble d'organes de communication permettant la transmission des mesures acquises par l'unité de mesure, par exemple à une passerelle de collecte ou à une passerelle résidentielle.

Typiquement, l'unité de communication comprend des organes de communication via un réseau téléphonique, via Internet (protocoles de communication sur IP, via un système LoRa (marque déposée) de la société Semtech, via un système Wi-Fi (marque déposée), via un système de type ZigBee (marque déposée), via un système de type Bluetooth (marque déposée), via un système de réseau étendu à basse consommation LPWAN (« Low Power Wide Area Network » en anglais), ou via un réseau cellulaire dédié à l'internet des objets de type NB-IOT (« Narrowband Internet Of Things » en anglais) ou de type LTE Cat-M (« Long Term Evolution - Category Machine » en anglais).

La durée de vie d'un compteur communicant CPT1 à CPTN est généralement un multiple de dizaine d'années. Il est difficile de dimensionner la taille de la pile pour absorber tous les aléas et les changements de cas d'usage d'un compteur communicant pour une période aussi longue.

La consommation d'énergie d'un compteur communicant peut se décomposer en deux catégories. Une première catégorie regroupe les consommations liées à l'électronique et au fonctionnement logiciel. Les éléments de la première catégorie sont par nature déterministes et peuvent être déterminés au moment de la conception et de la qualification du compteur communicant. Les modèles de vieillissement des composants électroniques sont aussi bien connus et maitrisés.

Une seconde catégorie concerne la consommation liée à l'échange de données par un réseau privé sécurisé SPN. Les éléments de la seconde catégorie sont par nature non déterministe car ils dépendent de plusieurs facteurs pouvant fortement évoluer durant les années de durée de vie de la pile et du compteur communicant. Ces facteurs sont par exemple la couverture du réseau cellulaire, la charge de la cellule du réseau cellulaire ainsi que les cas d'usage du compteur communicant tels que les mise à jour, la lecture de données à la demande...

La consommation d'énergie non déterministe peut être prépondérante, ce qui pose un problème pour garantir la durée de vie du compteur communicant.

La présente invention permet d'assurer, de manière automatique et par projection temporelle, une durée de vie minimale d'un compteur communicant alimenté par pile et ce sur plusieurs années, alors que les conditions d'environnement radio et cas d'usage peuvent fortement varier sur une période aussi longue. Il est en effet, pratiquement impossible de prédire l'évolution des conditions radio et l'évolution des cas d'usage métier (en plus des envois périodiques) déclenchées par l'opérateur des compteurs communicants, les mises à jour logicielles, les lectures et actions à la demande.

La Fig. 2 illustre schématiquement un exemple d'architecture matérielle d'une plateforme centralisée de gestion de compteurs communicants alimentés par piles.

Selon cet exemple, la plateforme centralisée de gestion de compteurs communicants HES comporte, reliés par un bus de communication 200 : un processeur PROC ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface radio Res 205 permettant à la plateforme centralisée de gestion de compteurs communicants HES de communiquer avec les compteurs communicants CPT1 à CPTN.

Le processeur 201 est capable d'exécuter des instructions chargées dans la RAM 202 à partir de la ROM 203, d'une mémoire externe, d'un support de stockage, ou éventuellement d'un réseau de communication. Lorsque la plateforme centralisée de gestion de compteurs communicants HES est mise sous tension, le processeur 201 est capable de lire de la RAM 202 des instructions et de les exécuter. Ces instructions forment un programme d'ordinateur causant l'implémentation, par le processeur 201, de tout ou partie du procédé de gestion décrit ci-après.

Ainsi, tout ou partie du procédé de gestion décrit ci-après peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

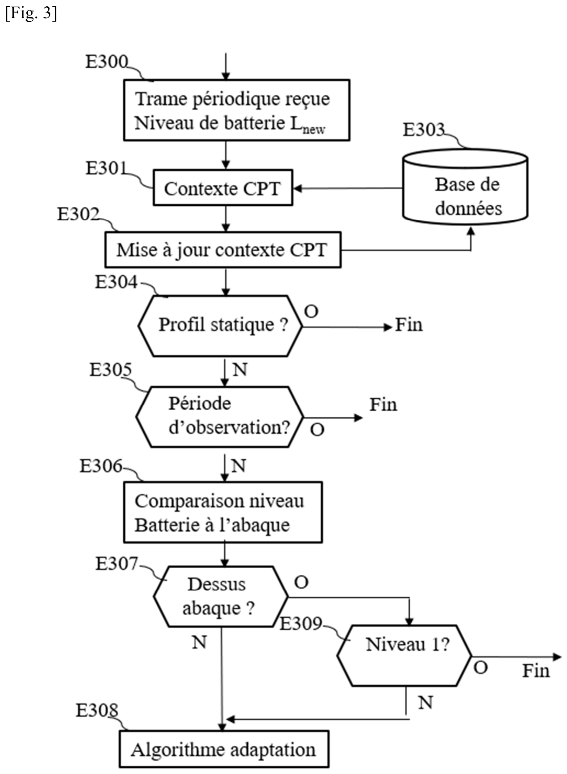

La Fig. 3 est un algorigramme d'un procédé de surveillance de la durée de vie de compteurs communicants alimentés par piles.

Le présent algorithme est exécuté par la plateforme centralisée de gestion de compteurs communicants HES pour chaque compteur communicant CPT1 à CPTN.

La centralisation du procédé de gestion permet un traitement unifié des données provenant de l'ensemble des compteurs communicants. Cette approche offre une vue globale du réseau, ce qui facilite la détection rapide des anomalies, des dérives énergétiques et des comportements inhabituels.

En regroupant les fonctions de gestion dans une seule plateforme, les coûts opérationnels sont réduits, notamment en limitant les interventions locales et en simplifiant la mise à jour des logiciels. La sécurité est également renforcée grâce à un contrôle centralisé des accès et à l'application homogène des mesures de cybersécurité.

La maintenance est plus efficace, avec un diagnostic plus précis et une meilleure planification des interventions. La centralisation permet aussi une gestion optimisée des ressources, basée sur une vision consolidée du système. Enfin, l'analyse centralisée des performances, en comparaison avec des modèles de référence, améliore la détection des écarts et l'optimisation du fonctionnement des équipements.

Cet algorithme permet de surveiller l'état de la pile de chaque compteur communicant.

A l'étape E300, la plateforme centralisée de gestion de compteurs communicants HES détecte la réception d'une trame émise par un compteur communicant. La trame émise par le compteur communicant comporte au moins un identifiant unique du compteur communicant et une information représentative du niveau de pile L_{new} du compteur communicant.

L'information représentative du niveau de pile est par exemple exprimée en pourcentage par rapport à la capacité maximale de charge de la pile. L'information représentative du niveau de pile peut par exemple être exprimée en Volts.

A l'étape suivante E301, la plateforme centralisée de gestion de compteurs communicants HES obtient d'une base de données notée E303, des informations associées au compteur communiquant ayant émis la trame de données.

Les informations associées au compteur communicant comportent au moyen une information représentative de l'âge du compteur communicant, le profil préalablement défini du compteur communicant et le niveau de pile précédemment reçu du compteur communicant. Les informations associées au compteur communicant peuvent aussi comporter d'autres informations telles que le nombre de trames émises et reçues par le compteur communicant, une information indiquant si le profil du compteur communicant peut ou ne peut pas être modifié (en d'autres termes si le profil est statique ou dynamique) , une information indiquant si le compteur communicant est dans une période dite d'observation.

L'information indiquant si le profil du compteur communicant peut ou ne doit pas être modifié est par exemple définie par l'opérateur de la plateforme de service. Cette information peut être modifiée par l'opérateur de fourniture de fluide à tout moment. Lorsque le profil du compteur communicant peut être modifié, celui-ci est appelé profil dynamique. Lorsque le profil du compteur communicant ne doit pas être modifié, celui-ci est appelé profil statique.

La période d'observation est par exemple une période pendant laquelle, lorsqu'un changement de profil du compteur communicant est effectué, le profil du compteur communicant n'est plus modifié afin d'éviter des changements trop rapides entre deux profils qui pénalisent la consommation en énergie électrique du compteur communicant.

Par exemple, la durée de la période d'observation est par exemple au minimum égale à un mois. La période d'observation est par exemple initialisée à la valeur nulle représentative de sa non activation. Lorsqu'elle est activée, un compte à rebours égal à 1 mois est déclenché et qui à la fin de la période d'observation arrive à la valeur nulle.

A l'étape suivante E303, la plateforme centralisée de gestion de compteurs communicants HES met à jour le profil du compteur communicant avec la trame reçue et les informations qu'elle comporte et commande la mémorisation du profil mis à jour dans la base de données.

A l'étape suivante E304, la plateforme centralisée de gestion de compteurs communicants HES vérifie si le profil du compteur communicant est statique.

Dans l'affirmative, la plateforme centralisée de gestion de compteurs communicants HES interrompt le présent algorithme.

Dans la négative, la plateforme centralisée de gestion de compteurs communicants HES passe à l'étape E305.

A l'étape E305, la plateforme centralisée de gestion de compteurs communicants HES vérifie si une période d'observation est associée au compteur communicant.

Dans l'affirmative, la plateforme centralisée de gestion de compteurs communicants HES interrompt le présent algorithme.

Dans la négative, la plateforme centralisée de gestion de compteurs communicants HES passe à l'étape E306.

A l'étape E306, la plateforme centralisée de gestion de compteurs communicants HES compare l'information représentative du niveau de pile L_{new} du compteur communicant à un abaque prédéfini représentatif d'une évolution du niveau de pile en fonction de l'âge du compteur.

Un tel abaque prédéfini est une représentation anticipée et théorique de l'évolution du niveau de charge dans le temps. Il est ainsi possible non seulement de suivre une trajectoire énergétique attendue, mais aussi de détecter d'éventuelles dérives anormales, révélatrices d'un dysfonctionnement prématuré ou d'une usure accélérée.

A l'étape suivante E307, la plateforme centralisée de gestion de compteurs communicants HES vérifie à partir de l'âge du compteur communicant si l'information représentative du niveau de pile L_{new} du compteur communicant est supérieure au niveau de pile pour l'âge du compteur de l'abaque.

Dans l'affirmative, la plateforme centralisée de gestion de compteurs communicants HES passe à l'étape E309. Dans la négative, la plateforme centralisée de gestion de compteurs communicants HES passe à l'étape E308.

A l'étape E308, la plateforme centralisée de gestion de compteurs communicants HES vérifie si le profil préalablement défini du compteur communicant est égal à 1. Dans l'affirmative, la plateforme centralisée de gestion de compteurs communicants HES interrompt le présent algorithme.

Dans la négative, la plateforme centralisée de gestion de compteurs communicants HES passe à l'étape E308.

L'étape E308 consiste à lancer l'algorithme d'adaptation du fonctionnement de compteurs communicants alimentés par piles.

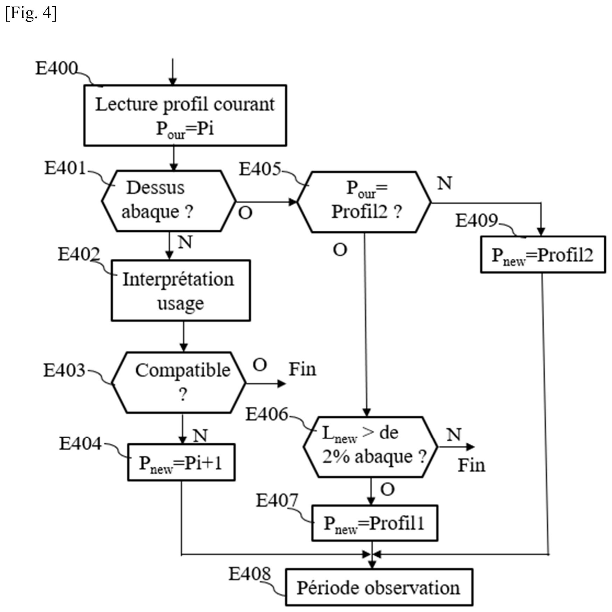

L'étape E308 est décrite plus en détail en référence à la Fig. 4.

La Fig. 4 est un algorigramme d'un procédé d'adaptation du fonctionnement de compteurs communicants alimentés par piles.

Cet algorithme consiste à adapter le profil du compteur communicant.

Chaque profil noté P contient des paramètres techniques à appliquer sur le compteur communicant. La liste des paramètres et leurs valeurs seront déterminées à l'avance et choisies afin d'établir un niveau d'équilibre entre consommation d'énergie et précision de l'information.

Le profil 1 est un profil normal offrant un équilibre optimal prévu lors de la conception du compteur communicant. Le profil 1 est appliqué, par défaut lors de la mise en service d'un compteur communicant. Plus le numéro du profil est élevé, plus la précision de l'information est réduite, au profit d'un accroissement de la durée de vie de la pile. Le nombre de profils n'est donc pas limité, mais dans l'exemple tel que décrit trois profils sont définis. Le profil 1 correspond à un fonctionnement normal, le profil 2 correspond à un fonctionnement dégradé et le profil 3 correspond à un fonctionnement extrême.

Chaque profil contient un ensemble de paramètres techniques qui sont configurés dans le compteur communicant lors de l'installation de ce dernier. La liste des paramètres techniques dépend des capacités offertes par le modèle de données du compteur communicant et de ses capacités. Par exemple, la période d'envoi des données utiles de comptage, la profondeur du tampon de données envoyées à chaque période. En effet, il est commun d'implémenter, au niveau du compteur communiquant, une fonctionnalité de reprise sur erreur, de sorte que si le compteur communicant n'a pas réussi à communiquer des données lors d'une période, il renverra les données lors de la période suivante en combinaison avec les données envoyées devant normalement être envoyées à la période suivante et ainsi de suite. Limiter cette profondeur, limite donc la durée de communication, pour les compteurs communicants souffrant de mauvaise couverture radio.

L'algorithme proposé respecte les règles suivantes :
Le changement vers un profil ne se fait que vers le profil adjacent, à la hausse comme à la baisse.

A l'étape E400, la plateforme centralisée de gestion de compteurs communicants HES obtient le profil du compteur communicant de la base de données E303.

A l'étape E401, la plateforme centralisée de gestion de compteurs communicants HES vérifie à partir de l'âge du compteur communicant si l'information représentative du niveau de pile L_{new} du compteur communicant est supérieure au niveau de pile pour l'âge du compteur de l'abaque.

Dans la négative, la plateforme centralisée de gestion de compteurs communicants HES passe à l'étape E402.

Dans l'affirmative, la plateforme centralisée de gestion de compteurs communicants HES passe à l'étape E405.

A l'étape E402, la plateforme centralisée de gestion de compteurs communicants HES effectue une interprétation de l'usage en énergie électrique du compteur communicant. La plateforme centralisée de gestion de compteurs communicants HES effectue, à partir de la consommation en énergie électrique du compteur communicant HES sur une période de temps, une extrapolation linéaire de la consommation en énergie électrique du compteur communicant HES jusqu'à la fin de vie de la pile prévue par le constructeur du compteur communiquant. La période de temps est par exemple égale à la période d'observation, typiquement 1 mois.

A l'étape E403, la plateforme centralisée de gestion de compteurs communicants HES vérifie si la consommation extrapolée est inférieure ou égale à l'information représentative du niveau de pile L_{new} du compteur communicant. Dans la négative, la plateforme centralisée de gestion de compteurs communicants HES passe à l'étape E404. Dans l'affirmative, la plateforme centralisée de gestion de compteurs communicants HES interrompt le présent algorithme.

A l'étape E404, la plateforme centralisée de gestion de compteurs communicants HES incrémente le profil de compteur d'une unité, c'est-à-dire que si le profil courant Pₒᵤᵣ du compteur communicant est profil 1, le nouveau profil P_{new} est profil 2 et si le profil courant Pₒᵤᵣ du compteur communicant est profil 2, le nouveau profil P_{new} est profil 3.

Comme la présente invention est décrite dans un exemple à trois profils, si le profil du compteur communicant était profil 3, le nouveau profil reste profil 3.

Cette opération effectuée, la plateforme centralisée de gestion de compteurs communicants HES passe à l'étape E408.

A l'étape E405, la plateforme centralisée de gestion de compteurs communicants HES vérifie si le profil courant Pₒᵤᵣ du compteur communicant est profil 2.

Dans l'affirmative, la plateforme centralisée de gestion de compteurs communicants HES passe à l'étape E406.

Dans la négative, la plateforme centralisée de gestion de compteurs communicants HES passe à l'étape E409.

A l'étape E409, la plateforme centralisée de gestion de compteurs communicants HES met le nouveau profil P_{new} à profil 2 pour passer ensuite à l'étape E408.

A l'étape E406, la plateforme centralisée de gestion de compteurs communicants HES vérifie si l'information représentative du niveau de pile L_{new} du compteur communicant est supérieure d'un pourcentage prédéterminé, par exemple 2% au niveau de pile pour l'âge du compteur communicant correspondant dans l'abaque.

Dans l'affirmative, la plateforme centralisée de gestion de compteurs communicants HES passe à l'étape E407.

Dans la négative, la plateforme centralisée de gestion de compteurs communicants HES interrompt le présent algorithme.

A l'étape E407, la plateforme centralisée de gestion de compteurs communicants HES met le nouveau profil P_{new} à profil 1 pour passer ensuite à l'étape E408.

A l'étape E408, la plateforme centralisée de gestion de compteurs communicants HES déclenche une période d'observation P_{obs} et commande, si le profil sélectionné est différent du profil de fonctionnement donné du compteur communicant, le transfert d'un message au compteur communicant lui indiquant le nouveau profil P_{new} à appliquer.

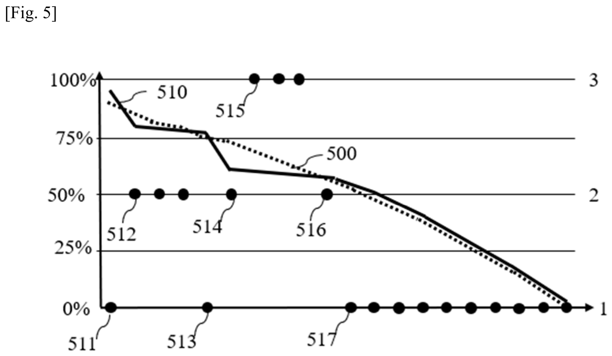

La Fig. 5 est un exemple d'évolution de la consommation électrique d'un compteur communicant alimenté par piles et d'un abaque utilisé par la présente invention.

Sur l'axe des abscisses est représenté le temps et sur l'axe des ordonnées est représenté à gauche le niveau de charge de la pile ou le niveau de charge de l'abaque et à droite le niveau du profil : 1 pour profil 1, 2 pour profil 2 et 3 pour profil 3.

L'abaque est par exemple déterminé suite à des tests d'endurance et de vieillissement accéléré en laboratoire.

La courbe notée 500 représente les valeurs de l'abaque et la courbe 510 représente l'évolution du niveau de charge réel de la pile.

Par exemple, pendant la première année 511, la consommation du compteur est inférieure au modèle. Le profil 1 reste donc appliqué.

La seconde année 512, suite à des mises à jour logicielles fréquentes, les échanges volumineux de données ont réduit de manière importante le niveau de la pile passant en dessous de l'abaque, le profil 2 est alors appliqué. Le profil 2 est ensuite appliqué pendant 3 années tant que le niveau de la pile reste en dessous de l'abaque.

La cinquième année 513, le niveau de charge de la pile passe au-dessus de l'abaque et le profil 1 est alors appliqué.

La sixième année 514, des conditions radio changeantes (modification du plan cellulaire de l'opérateur) épuisent la batterie. Le profil 2 est appliqué, non suffisant, ce qui déclenche ensuite à la septième année 515 une application du profil 3 et cela pendant une durée de 3 ans. La dixième année 516, le niveau de charge de la pile passe au-dessus de l'abaque et le profil 2 est alors appliqué.

La onzième année 517, le niveau de charge de la pile est au dessus de l'abaque et le profil 1 est alors appliqué.

La présente divulgation permet de détecter de manière anticipée une dérive vers une situation de surconsommation, avant même l'atteinte d'un seuil critique. Cette détection précoce permet d'anticiper les risques, d'adapter dynamiquement le profil de consommation, et de rétablir automatiquement un fonctionnement nominal dès que la cause de la surconsommation est résolue.

Par ailleurs, la gestion centralisée des profils de consommation permet des ajustements rapides, de l'ordre de quelques minutes à quelques heures, sans nécessiter de modification du micro-logiciel embarqué dans les compteurs individuels. Cette approche centralisée offre une grande flexibilité opérationnelle et permet une mise à jour en temps réel des paramètres de fonctionnement sur l'ensemble du réseau, assurant une continuité de service optimisée et une meilleure adaptabilité aux conditions réelles d'usage.

## Revendications

1. Procédé de gestion de compteurs communicants alimentés par pile, pour mesurer une consommation d'un fluide, les compteurs communicants étant reliés à une plateforme centralisée de gestion de compteurs communicants, le compteur communicant étant dans un profil de fonctionnement donné, **caractérisé en ce que** le procédé comporte les étapes, exécutées par la plateforme centralisée de gestion de compteurs communicants de :
- réception (E300), d'un compteur communicant, d'une information représentative d'un niveau de charge de la pile du compteur communicant,
- obtention (E301) de l'âge du compteur communicant,
- détermination (E307) à partir de l'information représentative du niveau de charge de la pile du compteur communicant et de l'âge du compteur communicant si ledit niveau de charge est inférieur ou supérieur à un abaque représentatif d'une évolution théorique d'un niveau de charge d'une batterie au cours du temps,
- sélection (E308) d'un profil de fonctionnement du compteur communicant en fonction de la détermination.
- transfert (E408) dudit profil de fonctionnement sélectionné au compteur communicant si ledit profil de fonctionnement sélectionné est différent du profil de fonctionnement donné du compteur communicant.

2. Procédé selon la revendication 1, **caractérisé en ce que** le procédé est itératif et lorsqu'un profil de fonctionnement sélectionné est différent du profil de fonctionnement donné du compteur communicant, le procédé comporte en outre une étape d'attente pendant une durée prédéterminée avant d'exécuter une nouvelle itération du procédé.

3. Procédé selon la revendication 1 ou 2, **caractérisé en ce que** les étapes de détermination, de sélection et de transfert sont conditionnelles à un profil dynamique du compteur communicant.

4. Procédé selon l'une quelconque des revendications 1 à 3, **caractérisé en ce que** au moins trois profils différents sont sélectionnables :
un premier profil dans lequel le compteur communicant est dans un mode de fonctionnement nominal,
un second profil dans lequel le compteur communicant est dans un mode de fonctionnement dégradé,
un troisième profil dans lequel le compteur communicant est dans un mode de fonctionnement minimal.

5. Procédé selon la revendication 4, **caractérisé en ce que** si le profil de fonctionnement donné est le premier profil, le profil sélectionné est le premier ou le second profil, si le profil de fonctionnement donné est le second profil, le profil sélectionné est le premier ou le second ou le troisième profil et si le profil de fonctionnement donné est le troisième profil, le profil sélectionné est le second ou le troisième profil.

6. Procédé selon la revendication 5, **caractérisé en ce que** si le profil de fonctionnement donné est le second profil, le procédé préalablement à la sélection du premier profil vérifie si le niveau de charge est supérieur à l'abaque représentatif d'une évolution théorique d'un niveau de charge d'une batterie au cours du temps d'un nombre prédéterminé de pourcents.

7. Procédé selon la revendication 5 ou 6, **caractérisé en ce que** si le niveau de charge est inférieur à l'abaque représentatif d'une évolution théorique d'un niveau de charge d'une batterie au cours du temps, le procédé comporte en outre les étapes d'extrapolation linéaire de la consommation en énergie électrique du compteur communicant jusqu'à la fin de vie de la pile prévue par le constructeur du compteur communiquant à partir de la consommation en énergie électrique du compteur communicant sur une période de temps et de vérification si la consommation extrapolée est inférieure ou égale à l'information représentative du niveau de charge de la pile du compteur communicant et **en ce que** la sélection d'un profil de fonctionnement différent du profil de fonctionnement donné est effectuée si la consommation extrapolée est inférieure ou égale à l'information représentative du niveau de charge de la pile du compteur communicant.

8. Dispositif de gestion de compteurs communicants alimentés par piles, pour mesurer une consommation d'un fluide, les compteurs communicants étant reliés à une plateforme centralisée de gestion de compteurs communicants, le compteur communicant étant dans un mode de fonctionnement donné, **caractérisé en ce que** le dispositif de gestion est compris dans la plateforme centralisée de gestion de compteurs communicants et comporte :
- des moyens de réception, d'un compteur communicant, d'une information représentative d'un niveau de charge de la pile du compteur communicant,
- des moyens d'obtention de l'âge du compteur communicant,
- des moyens de détermination à partir de l'information représentative du niveau de charge de la pile du compteur communicant et de l'âge du compteur communicant si le dit niveau de charge est inférieur ou supérieur à un abaque représentatif d'une évolution théorique d'un niveau de charge d'une batterie au cours du temps,
- des moyens de sélection d'un profil de fonctionnement du compteur communicant en fonction de la détermination,
- des moyens de transfert du profil de fonctionnement sélectionné au compteur communicant si ledit profil de fonctionnement sélectionné est différent du profil de fonctionnement donné du compteur communicant.

9. Produit programme d'ordinateur comprenant des instructions de code de programme pour exécuter le procédé de gestion selon l'une quelconque des revendications 1 à 7, lorsque lesdites instructions sont exécutées par un processeur.

10. Support de stockage non transitoire sur lequel est stocké un programme d'ordinateur comprenant des instructions de code de programme pour exécuter le procédé de gestion selon l'une quelconque des revendications 1 à 7, lorsque lesdites instructions sont lues depuis ledit support de stockage non transitoire et exécutées par un processeur.
